# EUROPÄISCHE PATENTSCHRIFT

(11) **EP 1 912 849 B1**
(45) Veröffentlichungstag und Bekanntmachung des Hinweises auf die Patenterteilung: **24.02.2010**
(21) Anmeldenummer: 06776637.8
(22) Anmeldetag: 05.08.2006
(51) Int. Cl.: B62D 25/04, B62D 29/00, B21B 37/26

(54) **VERSTÄRKUNGSBLECH FÜR EINE B-SÄULE EINER FAHRZEUGKAROSSEHE**
REINFORCING METAL PLATE FOR A B-PILLAR OF A VEHICLE BODY
TOLE DE RENFORCEMENT CONÇUE POUR UNE COLONNE B D'UNE CARROSSERIE DE VEHICULE

(30) Priorität: 13.08.2005 DE 102005038488
(43) Veröffentlichungstag der Anmeldung: 23.04.2008
(73) Patentinhaber: Bayerische Motoren Werke Aktiengesellschaft, 80809 München (DE); Muhr und Bender KG, 57439 Attendorn (DE); Benteler Automobiltechnik GmbH, 33102 Paderborn (DE)
(72) Erfinder: RIESS, Mark, 85777 Fahrenzhausen (DE); HAUGER, Andreas, 57439 Attendorn (DE); GEHRINGHOFF, Ludger, 33106 Paderborn (DE); SCHÄFERS, Johannes, 33178 Borchen (DE)
(86) Internationale Anmeldenummer: PCT/EP2006/007769
(87) Internationale Veröffentlichungsnummer: WO 2007/019979

(56) Entgegenhaltungen:
- EP-A- 0 788 849
- EP-A- 1 621 453
- DE-A1- 19 704 300
- DE-U1- 20 014 361
- SCHWARZ N ET AL: "FLEXIBEL GEWALZTE BLECH FUER BELASTUNGSANGEPASSTE WERKSTUECKE" WERKSTATT UND BETRIEB, CARL HANSER VERLAG, MUNCHEN, DE, Bd. 131, Nr. 5, Mai 1998 (1998-05), Seiten 424-427, XP000776752 ISSN: 0043-2792

## Beschreibung

Die Erfindung betrifft ein Verstärkungsblech für eine B-Säule einer Fahrzeugkarosserie nach dem Oberbegriff des Patentanspruchs 1.

Der Einsatz von sogenannten Tailored Welded Blanks im Automobilbau ist bereits allgemein bekannt. So heißt es dazu beispielsweise im Buch "Tailored Blanks", Band 250 der Reihe "Die Bibliothek der Technik", Verlag moderne industrie (ISBN 3-478-93294-7) auf Seite 10ff:
"Ein Fahrzeug besteht aus einer Vielzahl von Einzelteilen, die zu Untergruppen zusammengefasst werden. Eine solche Untergruppe muss in der Regel verschiedene Anforderungen erfüllen, die sich jedoch teilweise widersprechen. So soll z. B. eine Tür ein möglichst geringes Gewicht haben, d. h. aus möglichst dünnem Blech bestehen, und dennoch eine große Festigkeit und Steifigkeit im Bereich der Scharniere aufweisen. Um diese gegensätzlichen Anforderungen zu erfüllen, werden die Eigenschaften der verschiedenen Türbereiche üblicherweise durch die Integration zusätzlicher Einzelteile optimiert. Im Bereich der Türscharniere und des Schlosses müssen Verstärkungen an das Türinnenblech angeschweißt werden, um die notwendige Festigkeit für die Aufnahme der dort angreifenden Kräfte zu gewährleisten. Die Integration zusätzlicher Einzelteile verursacht Kosten, da diese Teile eigens hergestellt und mit der Untergruppe verbunden werden müssen. Darüber hinaus können sich durch die eingesetzten Fügeverfahren einzelne Merkmale der Untergruppe verschlechtern. Zusätzliche Schmelz- und Punktverschweißungen erhöhen z. B. den thermisch bedingten Verzug und vergrößern somit die Abweichungen von der gewünschten Form der Untergruppe.

Ein Tailored Blank besteht aus mehreren Blechen unterschiedlicher Dicke, mechanischer Eigenschaften und Oberflächenbeschichtungen. Die ortsabhängigen Eigenschaften können bereits über die Materialeigenschaften der Bleche realisiert werden. Daher sind keine zusätzlichen Bauteile, z. B. zur Verstärkung, zu fertigen. Die geringere Anzahl von Einzelteilen führt auch zu einer Verringerung von Bauteiltoleranzen der Untergruppe. ...
Häufig reduzieren Tailored Blanks das Gewicht der Untergruppe. Bei Anwendungen wie z. B. dem Fahrzeugboden lassen sich Punktschweißverbindungen an überlappenden Blechkanten durch kontinuierliche, laserstrahlgeschweißte Nähte ersetzen. Da die Überlappung der Bleche entfällt, wird der Materialeinsatz verringert und Gewicht eingespart."

Weiterhin offenbart DE 19704300 auch die Anwendung von Tailored Blanks.

Aufgabe der Erfindung ist es, ein Verstärkungsblech für eine B-Säule einer Fahrzeugkarosserie zu schaffen, das die Anforderungen in allen Teilbereichen erfüllt, sodass neben dem Verstärkungsblech keine zusätzlichen Einzelteile zur Verstärkung der B-Säule erforderlich sind.

Diese Aufgabe wird mit einem Verstärkungsblech für eine B-Säule einer Fahrzeugkarosserie mit den Merkmalen des Patentanspruchs 1 gelöst.

Üblicherweise besteht eine B-Säule einer Fahrzeugkarosserie zumindest aus einer Außenschale, die meist einteilig mit einem Seitenrahmen ausgebildet ist, der zugleich zumindest einen Teil eines Seitenschwellers, eines Dachseitenrahmens, einer A-Säule und gegebenenfalls einer C-Säule bildet. Die Außenschale, und damit gegebenenfalls der Seitenrahmen, soll dabei aus Gewichtsgründen aus einem möglichst dünnen Blech bestehen. Andererseits muss die B-Säule im Anbindungsbereich von Türscharnieren und von Türschlössern und zum Schutz der Insassen des Fahrzeugs bei einem Seitencrash eine hohe Festigkeit aufweisen. Dazu weist die B-Säule ein Verstärkungsblech auf, das sich über die gesamte Höhe der B-Säule erstreckt. Die Anforderungen an dieses Verstärkungsblech sind dabei nicht in allen Bereichen gleich groß. So muss das Verstärkungsblech im unteren Abschnitt, in dem die B-Säule an den Seitenschweller anschließt, nur relativ geringe Festigkeits- und Steifigkeitsanforderungen erfüllen, während die Anforderungen an das Verstärkungsblech in der oberen Hälfte wesentlich höher sind, um zu gewährleisten, dass sich bei einem Seitencrash die B-Säule möglichst wenig in den Fahrgastraum hinein deformiert. Erfindungsgemäß besteht das Verstärkungsblech aus einem umgeformten Tailored Rolled Blank. Ein Tailored Rolled Blank wird durch flexibles Walzen hergestellt. Es weist quer zur Walzrichtung unterschiedliche Dicken auf. Die Bereiche unterschiedlicher Dicke verlaufen dabei parallel zueinander. Verfahrensbedingt lassen sich die Materialeigenschaften des Bauteils nur stark eingeschränkt beeinflussen. Im Gegensatz zu einem klassischen Tailored Welded Blank, wie es in dem oben angegebenen Buch beschrieben ist, besteht also das Tailored Rolled Blank nicht aus unterschiedlichen Materialen, sondern weist nur quer zur Walzrichtung unterschiedliche Dicken auf. Das erfindungsgemäße Verstärkungsblech, das aus einem solchen Tailored Rolled Blank hergestellt ist, kann dementsprechend in unterschiedlichen Höhen der B-Säule unterschiedliche Blechdicken aufweisen. Es kann also in den Bereichen, an die besonders hohe Festigkeits- und Steifigkeitsanforderungen gestellt werden, besonders dick sein, während es in den Bereichen, die nur geringe Festigkeits- und Steifigkeitsanforderungen erfüllen müssen, entsprechend dünn ausgeführt sein kann. Dadurch können mit einem einzigen Verstärkungsblech die unterschiedlichen Anforderungen in den einzelnen Bereichen erfüllt werden. Andererseits ist das Verstärkungsblech nicht überall so dick, wie es im Bereich mit den höchsten Anforderungen erforderlich ist. Dadurch weist das erfindungsgemäße Verstärkungsblech ein deutlich geringeres Gewicht auf, als ein Verstärkungsblech, das aus einer konventionellen Blechplatine umgeformt ist. Zudem kann das Tailored Rolled Blank beliebig viele Bereiche mit unterschiedlichen Dicken aufweisen, ohne dass sich dadurch wie bei einem Tailored Welded Blank die Herstellkosten erhöhen würden. Damit kann es optimal auf die jeweilige Verwendung abgestimmt werden, ohne dass dadurch die Herstellkosten steigen.

Bevorzugt besteht das Tailored Rolled Blank aus einem höchstfesten Stahl. Höchstfeste Stähle weisen eine Streckgrenze von etwa 420 N / mm² oder mehr auf. Idealerweise hat der höchstfeste Stahl eine Streckgrenze von 1300 N / mm². Ein solcher Stahl ist im Handel beispielsweise unter der Bezeichnung BTR 165 verfügbar. Derartige höchstfeste Stahlbleche weisen bei relativ dünnen Blechdicken bereits sehr hohe Festigkeiten auf, sodass sie im Vergleich zu konventionellen Stahlblechen bei gleicher Festigkeit ein deutlich geringeres Gewicht aufweisen. Das Verstärkungsblech, das aus dem Tailored Rolled Blank aus einem höchstfesten Stahl umgeformt ist, weist ein entsprechend niedriges Gewicht auf. Bei der Auswahl der geeigneten Blechgüte muss allerdings darauf geachtet werden, dass der erforderliche Umformgrad beim Tiefziehen prozesssicher erreicht werden kann, ohne dass das Stahlblech einreißt.

Günstigerweise besteht das Verstärkungsblech aus einem warmumgeformten Tailored Rolled Blank. Beim Warmumformen kommt es zu keiner oder nur wesentlich geringeren Verfestigungen im Stahlblech, da dieses bei Temperaturen oberhalb der Rekristallisationstemperatur des Stahlblechs umgeformt wird, die deutlich oberhalb der normalen Raumtemperatur liegt. Dadurch können Stahlgüten mit einer Zugfestigkeit verwendet werden, die bei einer Kaltumformung nicht den für das Verstärkungsblech erforderlichen Umformgrad aufweisen würden. So kann mit geringeren Blechdicken die gleiche Festigkeit erreicht werden, wie bei einer Platine mit größeren Blechdicken, die kaltumgeformt wird. Das Gewicht des Verstärkungsblechs kann so reduziert werden. Auch sind bei einem Warmumformverfahren die Rückfedereffekte wesentlich geringer als bei einem Kaltumformverfahren, sodass das Verstärkungsblech geringere Toleranzen aufweist, als ein vergleichbares Verstärkungsblech, das in einem Kaltumformverfahren hergestellt wurde.

Weitere vorteilhafte Ausgestaltungen sind Gegenstand von Unteransprüchen.

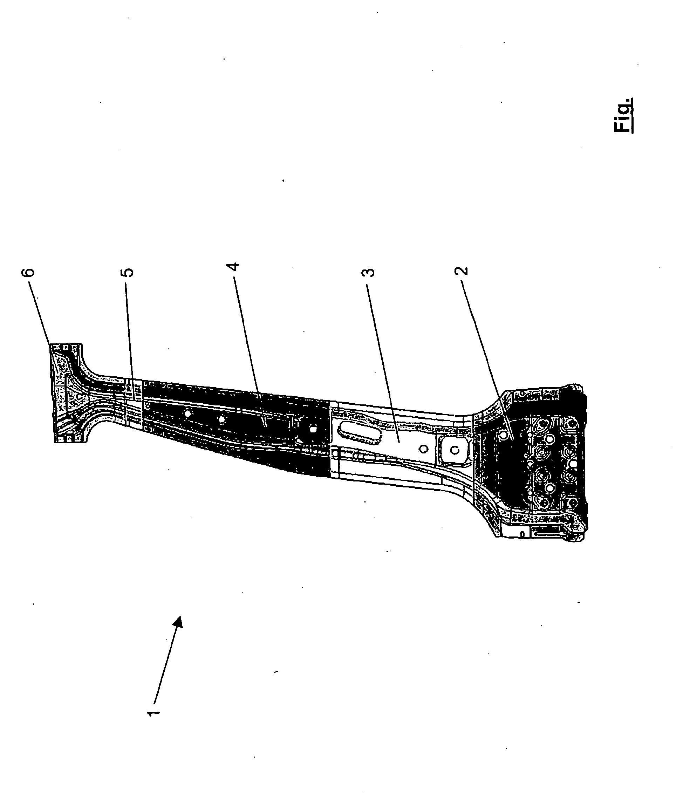

In der Zeichnung ist ein Ausführungsbeispiel der Erfindung dargestellt, anhand dessen die Erfindung im folgenden näher beschrieben wird. Die einzige Figur zeigt in schematischer Darstellungsweise eine Seitenansicht eines Verstärkungsblechs einer B-Säule einer Karosserie eines Personenkraftwagens.

In der Figur ist ein Verstärkungsblech 1 einer B-Säule einer Fahrzeugkarosserie einer Limousine gezeigt, das sich über die gesamte Höhe der B-Säule erstreckt. Die B-Säule ist in Schalenbauweise aus einer Innen- und einer Außenschale aufgebaut. Die Außenschale ist einteilig mit einem Seitenrahmen ausgeführt, der zugleich eine Außenschale für eine A-Säule, einen Seitenschweller und einen Dachseitenrahmen sowie einen hinteren Kotflügel bildet. Dieser Seitenrahmen, der auch die Außenschale der B-Säule bildet, besteht aus einem relativ dünnen Blech mit einer Blechdicke von ca. 0,8 mm. Dadurch weist die B-Säule im Bereich von Türscharnieren und im Bereich eines Türschlosses keine ausreichende Festigkeit und Steifigkeit auf. Auch zur Vermeidung einer erheblichen Deformation der B Säule bei einem Seitencrash reicht die Festigkeit der B-Säule nicht aus. Um die Festigkeit und die Steifigkeit der B-Säule zu erhöhen, ist zwischen der Innen- und der Außenschale de B-Säule das Verstärkungsblech 1 angeordnet.

Das Verstärkungsblech 1 besteht aus einem warmumgeformten Tailored Rolled Blank aus einem höchstfesten Stahl mit einer Streckgrenze von 1300 N / mm². Durch die Herstellung des Verstärkungsblechs 1 aus einem Tailored Rolled Blank kann dieses in unterschiedlichen Höhen der B-Säule unterschiedliche Blechdicken aufweisen.

Die Anforderungen an die Festigkeit und die Steifigkeit der B-Säule sind in der oberen Hälfte besonders groß, da oberhalb der Türbrüstungslinie die angrenzenden Seitentüren nur mehr geringfügig zur Festigkeit und Steifigkeit der Karosserie beitragen. Das Verstärkungsblech 1 weist daher im oberen Bereich 4 eine besonders hohe Blechdicke von 2,2 mm auf. Der obere Randbereich 6, der an einen Dachseitenrahmen angrenzt, und der untere Randbereich 2, der an einen Seitenschweller angrenzt, muss dagegen nur eine geringe Festigkeit und Steifigkeit aufweisen. Daher haben die beiden Randbereiche 2 und 6 nur eine Blechdicke von 1,2 mm. Der untere Bereich 3 zwischen dem oberen Bereich 4 und dem unteren Randbereich 2 muss ebenfalls nur relativ geringe Anforderungen erfüllen, sodass in dem unteren Bereich 3 eine Blechdicke von 1,4 mm ausreichend ist. Aufgrund der großen Unterschiede in der Blechdicke zwischen dem oberen Bereich 4 und dem oberen Randbereich 6 befindet sich zwischen diesen Bereichen ein kleiner Übergangsbereich 5 mit einer Blechdicke von 1,6 mm. Die unterschiedlichen Blechdicken zwischen den einzelnen Bereichen 2, 3, 4, 5 und 6 gehen jeweils kontinuierlich und ohne Dickensprung ineinander über. Dabei wird jeweils ein Übergangsbereich von mindestens 20 mm in Höhenrichtung der B-Säule pro Unterschied in der Blechdicke von 0,1 mm benötigt. Durch die Gestaltung der Blechdicke des Verstärkungsblechs 1 in den einzelnen Bereichen 2, 3, 4, 5 und 6 entsprechend der jeweiligen Anforderung ist das Verstärkungsblech 1 in keinem Bereich 2, 3, 4, 5 und 6 dicker als notwendig. Damit weist das Verstärkungsblech 1 gegenüber einem konventionellen Verstärkungsblech aus einer Platine mit einer gleichmäßigen Blechdicke ein deutlich geringeres Gewicht auf.

Zudem besteht das Verstärkungsblech 1 aus einem höchstfesten Stahl. Ein derartiges Stahlblech weist bereits bei Blechdicken eine Festigkeit auf, die wesentlich geringer sind als die Blechdicken eines Stahlblechs mit der gleichen Festigkeit aus einer nicht höchstfesten Stahlsorte. Allerdings reißt ein solcher höchstfester Stahl bereits bei vergleichsweise kleinen Umformgraden beim Kaltumformen. Daher ist das Verstärkungsblech 1 warmumgeformt worden. Beim Warmumformen kommt es zu keiner oder nur wesentlich geringeren Verfestigungen im Stahlblech, da dieses bei Temperaturen oberhalb der Rekristallisationstemperatur des Stahlblechs umgeformt wird, die deutlich oberhalb der normalen Raumtemperatur liegt. Somit lassen sich trotz des Einsatzes von höchstfesten Stahlsorten die erforderlichen Umformgrade realisieren, ohne dass das Tailored Rolled Blank dabei reißt.

## Patentansprüche

1. Verstärkungsblech einer B-Säule einer Fahrzeugkarosserie, das aus einem umgeformten Tailored Rolled Blank besteht, **dadurch gekennzeichnet, dass** sich das Verstärkungsblech über die gesamte Höhe der B-Säule erstreckt, und dass das Verstärkungsblech aus einem warmumgeformten Tailored Rolled Blank besteht, das in unterschiedlichen Höhen der B-Säule unterschiedliche Blechdicken aufweist.

2. Verstärkungsblech nach Anspruch 1, **dadurch gekennzeichnet, dass** das Tailored Rolled Blank aus einem höchstfesten Stahl besteht.

3. Verstärkungsblech nach Anspruch 2, **dadurch gekennzeichnet, dass** der höchstfeste Stahl eine Streckgrenze von 1300 N / mm² oder höher hat.

4. Verstärkungsblech nach einem der vorhergehenden Ansprüche, **dadurch gekennzeichnet, dass** das Tailored Rolled Blank keine Dickensprünge aufweist, sondern kontinuierliche Übergänge zwischen den einzelnen Bereichen unterschiedlicher Dicke.

## Claims

1. A reinforcing metal plate of a B-pillar of a vehicle body, which plate consists of a formed tailored rolled blank, **characterised in that** the reinforcing metal plate extends over the entire height of the B-pillar, and **in that** the reinforcing metal plate consists of a hot-formed tailored rolled blank which has different metal plate thicknesses at different heights of the B-pillar.

2. A reinforcing metal plate according to claim 1, **characterised in that** the tailored rolled blank consists of a high-strength steel.

3. A reinforcing metal plate according to claim 2, **characterised in that** the high-strength steel has a yield point of 1300 N/mm² or higher.

4. A reinforcing metal plate according to any one of the preceding claims, **characterised in that** the tailored rolled blank has no jumps in thickness, but continuous transitions between the individual regions of different thickness.

## Revendications

1. Tôle de renforcement pour une colonne (B) de carrosserie de véhicule composée d'une ébauche laminée aux dimensions, mise en forme, (Tailored Rolled Blank),
**caractérisée en ce que**
la tôle de renforcement s'étend sur toute la hauteur de la colonne (B),
la tôle de renforcement est constituée par une platine coupée aux dimensions (Tailored Rolled Blank), ayant des épaisseurs de tôle différentes ou différentes hauteurs de la colonne (B).

2. Tôle de renforcement selon la revendication 1,
**caractérisée en ce que**
la platine coupée aux dimensions (Tailored Rolled Blank) est en un acier très résistant.

3. Tôle de renforcement selon la revendication 2,
**caractérisée en ce que**
l'acier très résistant a une limite d'allongement d'au moins 1300 N/mm².

4. Tôle de renforcement selon l'une des revendications précédentes,
**caractérisée en ce que**
la platine coupée aux dimensions (Tailored Rolled Blank) ne présente par de variation d'épaisseur mais des passages continus entre les différentes zones d'épaisseurs différentes.
